# EUROPÄISCHE PATENTSCHRIFT

(11) **EP 0 399 264 B1**
(45) Veröffentlichungstag und Bekanntmachung des Hinweises auf die Patenterteilung: **02.11.1994**
(21) Anmeldenummer: 90108441.8
(22) Anmeldetag: 04.05.1990
(51) Int. Cl.: B65B 35/58, B65B 61/24, B65G 47/244

(54) **Verfahren und Vorrichtung zum Ändern der Relativstellung von Packungen, insbesondere quaderförmigen Zigaretten-Packungen des Typs Klappschachtel (Hinge-Lid-Packung)**
Method of and apparatus for changing the relative position of packs, especially of parallelepipedic cigarette packs of the flip-top type (hinge-lid pack)
Procédé et dispositif pour changer la position relative de paquets, en particulier de paquets de cigarettes parallélépipédiques du type à couvercle articulé (hinge-lid)

(30) Priorität: 26.05.1989 DE 3917115
(43) Veröffentlichungstag der Anmeldung: 28.11.1990
(73) Patentinhaber: Focke & Co. (GmbH & Co.), 27283 Verden (DE)
(72) Erfinder: Focke, Heinz, D-2810 Verden (DE); Buse, Henry, D-2722 Visselhövede (DE)
(74) Vertreter: Bolte, Erich, Dipl.-Ing.

(56) Entgegenhaltungen:
- DE-A- 1 917 533
- DE-A- 3 016 940
- FR-A- 2 320 235
- US-A- 3 901 381
- US-A- 4 086 744

## Beschreibung

Die Erfindung betrifft ein Verfahren zum Ändern der Relativstellung von Packungen, insbesondere quaderförmigen Zigaretten-Packungen des Typs Klappschachtel (Hinge-Lid-Packung), wobei die Packungen aufeinanderfolgend einer Drehstation zugeführt werden und dort während des Transports durch wenigstens zwei gesonderte Förderorgane, nämlich Drehförderer, gedreht werden, die an gegenüberliegenden Seiten der Packungen angreifen und die mit unterschiedlichen Geschwindigkeiten V4 und V5 angetrieben werden. Weiterhin betrifft die Erfindung eine Vorrichtung zum Ändern der Relativstellung von Packungen, mit Merkmalen gemäß dem Oberbegriff des unabhängigen Vorrichtungsanspruchs.

In Verpackungsmaschinen besteht häufig die Aufgabe, die Relativstellung von Packungen zu ändern. Dabei muß der vielfach empfindlichen Umhüllung der Packung Rechnung getragen werden. Es ist bekannt, Packungen quer zur ursprünglichen Bewegungsrichtung abzufördern. Dadurch ändert sich auch die Stellung relativ zur Förderrichtung. Durch diese abrupte Bewegungsrichtungsänderung wirken außerordentlich hohe Kräfte auf den Packungsinhalt und die diesen umhüllende Verpackung. Bei Packungen mit weichem Inhalt und nachgiebiger Verpackung, insbesondere bei Zigaretten-Packungen, sind Schäden an der Packung nicht auszuschließen. Dies gilt um so mehr, als gerade Zigarettenverpackungsmaschinen mit besonders hohen Geschwindigkeiten arbeiten.

Aus der DE-A-3 016 940 ist eine Fördereinrichtung für im Querschnitt rechteckige Flaschen bekannt. Letztere sind zwischen zwei seitlich angeordneten Förderbändern hindurchführbar. Durch unterschiedliche Geschwindigkeiten der Förderbänder sollen die Flaschen in eine bestimmte Richtung gedreht werden und in dieser verbleiben. Zur Unterstützung sind die Förderbänder mit einer dicken nachgiebigen Auflage versehen. Aufgrund der Geometrie der Anordnung ist nicht sichergestellt, daß die Flaschen tatsächlich bis in die gewünschte Position gedreht werden. Vielmehr ist es möglich, daß die Flaschen in einer angewinkelten, schrägen Position die Gasse zwischen den Förderbändern verlassen bzw. beim Eintritt in den nächsten Förderabschnitt festklemmen.

Aufgabe der vorliegenden Erfindung ist es nun, das erfindungsgemäße Verfahren bzw. die Vorrichtung so zu gestalten, daß am Ende des Drehvorganges bzw. am Ende der für die Drehbewegung zur Verfügung stehenden Förderstrecke eine ganz bestimmte Relativstellung der Packungen sichergestellt ist.

Das erfindungsgemäße Verfahren löst die Aufgabe dadurch, daß die Drehförderer die Packungen mit in Förderrichtung sich verringerndem Abstand zueinander beaufschlagen. Bei einer entsprechenden Ausbildung des engsten Bereiches zwischen den Drehförderern kann eine parallel zur Förderrichtung ausgerichtete Packung gerade diesen engen Bereich passieren.

Entsprechend ist die erfindungsgemäße Vorrichtung dadurch gekennzeichnet, daß die Drehförderer bzw. deren Mitnehmertrums unter Bildung einer Fördergasse in Förderrichtung zueinander konvergierend verlaufen.

Weitere Merkmale des erfindungsgemäßen Verfahrens bzw. der erfindungsgemäßen Vorrichtung sind den Unteransprüchen zu entnehmen.

Sowohl das erfindungsgemäße Verfahren als auch die erfindungsgemäße Vorrichtung sind nicht beschränkt auf die Förderung und das Ändern der Relativlage von exakt quaderförmigen Packungen, sondern umfaßt auch die Handhabung anders gestalteter Packungen mit zum Teil quadratischen Querschnitten, Würfelform, abgerundeten Kanten oder dergleichen.

Bevorzugte Ausführungsformen der Erfindung werden im folgenden anhand von Zeichnungen näher beschrieben. Es zeigen:
- Fig. 1: eine Draufsicht auf eine Drehstation mit vorgeordneter Zuförderbahn sowie einem im Bereich der Drehstation an die Zuförderbahn anschließenden Abförderer;
- Fig. 2: eine Seitenansicht der Vorrichtung gemäß Fig. 1;
- Fig. 3: eine weitere Ausführungsform der Erfindung in der Draufsicht mit gegenüber der Fig. 1 abweichend angeordneten Drehförderern.

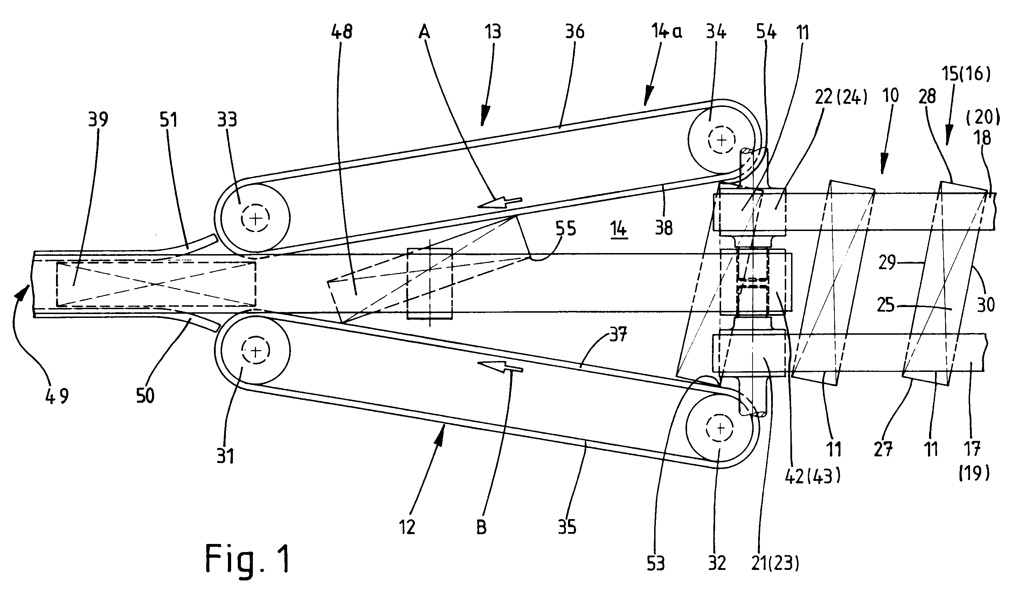

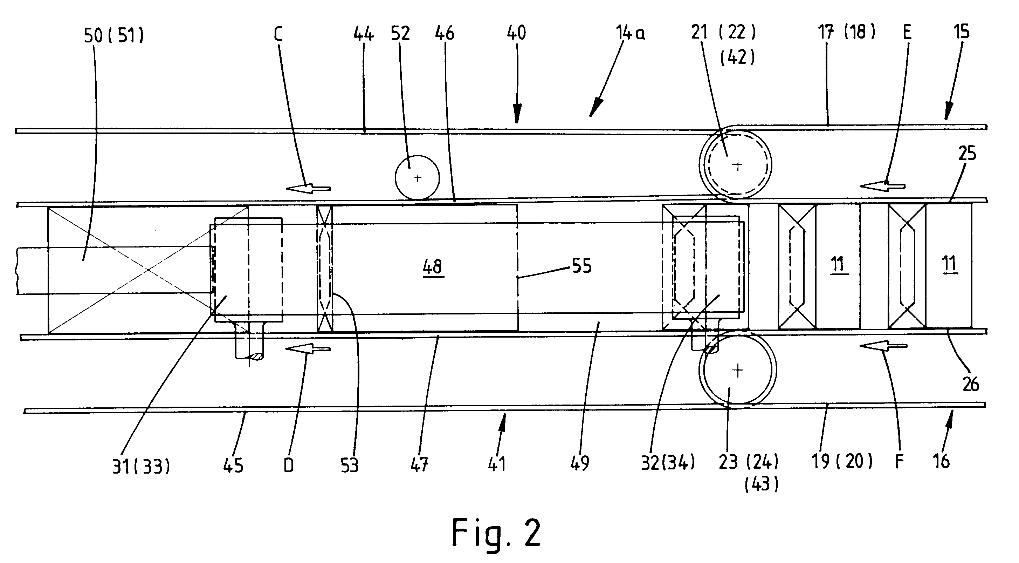

Eine Zuförderbahn 10 führt Packungen 11 einer durch zwei gesonderte Förderorgane, nämlich Drehförderer 12, 13 gebildeten Fördergasse 14 im Bereich einer Drehstation 14a zu. Die Zuförderbahn 10 weist zwei in parallelen Ebenen übereinander angeordnete Zuförderpaare 15, 16 auf. Jedes Zuförderpaar 15, 16 ist durch zwei Förderbänder 17, 18 bzw. 19, 20 gebildet. Das obere Zuförderpaar 15 ist demnach gebildet durch das in Förderrichtung linke obere Förderband 17 und das rechte obere Förderband 18. Entsprechend ist das untere Zuförderpaar 16 durch das untere linke Förderband 19 und das untere rechte Förderband 20 gebildet. Wie aus den Fig. 1 und 2 ersichtlich werden die Packungen 11 zwischen den Zuförderpaaren 15, 16 an jeweils insgesamt vier Auflagepunkten gehalten.

In einer einfacheren Ausführungsform ist nur ein unteres Zufördererpaar vorgesehen, so daß die Packungen nur zwei Auflagepunkte aufweisen.

Die Förderbänder 17 bis 20 der Zuförderbahn 10 sind über Umlenkrollen 21, 22 und 23, 24 geführt. Die Umlenkrollen für jeweils ein Zufördererpaar 15, 16 sind axial fluchtend angeordnet, ohne jedoch starr miteinander verbunden zu sein.

Die Packungen 11 sind rechteckige Zigaretten-Packungen aus festem Karton und liegen mit ihren Seitenwänden 25, 26 an den Förderbändern 17 bis 20 an. Stirnwand 27 und Bodenwand 28 einer jeden Packung 11 zeigen dabei in etwa quer zur Förderrichtung. Vorderwand 29 und Rückwand 30 zeigen in bzw. entgegen der Förderrichtung.

Die Drehförderer 12, 13 sind ebenso als über Umlenkrollen 31, 32 und 33, 34 geführte Förderbänder 35 und 36 ausgebildet. Ein jeweils in der Fördergasse 14 innenliegender Mitnehmertrum 37 bzw. 38 kommt zur Anlage mit einem bestimmten Bereich der Packung 11. Die Förderbänder 35, 36 sind in Förderrichtung konisch zulaufend ausgebildet, so daß sich die Fördergasse 14 in Förderrichtung verengt (vgl. Fig. 1). Der engste Bereich der Fördergasse 14 ist zwischen den Umlenkrollen 31 und 33 so bemessen, daß eine parallel zur Förderrichtung ausgerichtete Packung 39 gerade diesen engen Bereich passieren kann. Der Eintrittsbereich in die Fördergasse 14 zwischen den Umlenkrollen 32 und 34 im Anschluß an die Zuförderbahn 10 ist mindestens so breit, wie die Diagonale über eine der Seitenwände 25, 26 lang ist.

Zur Förderung der Packungen von der Zuförderbahn 10 bis über den Bereich der Fördergasse 14 hinaus sind zwei in etwa parallele und auf die Seitenwände 25, 26 wirkende Abförderer 40, 41 vorgesehen. Auch diese sind als über Umlenkrollen 42 bzw. 43 geführte Förderbänder 44, 45 ausgebildet. Ein jeweils innenliegendes Trum 46 bzw. 47 der Abförderer 40, 41 kommt zur Anlage mit den Seitenwänden 25, 26 der Packungen 11, 39, 48. Die Abförderer 40, 41 bilden auf diese Weise einen Förderkanal 49 in dem die Packungen 11, 39, 48 durch die Fördergasse 14 hindurchgefördert werden. Die Umlenkrollen 42, 43 für die Förderbänder 44, 45 der Abförderer 40, 41 sind mit den Umlenkrollen 21, 22 und 23, 24 der Zuförderbahn 10 fluchtend angeordnet, so daß die Packungen 11, 39, 48 ohne Höhenversatz oder Richtungsabweichung von der Zuförderbahn in die Fördergasse 14 eintreten können.

In Förderrichtung an die Fördergasse 14 anschließend ist der Förderkanal 49 durch seitliche Leitorgane 50, 51 begrenzt, so daß die Packung 39 in diesem Bereich der Abförderer 40, 41 nicht seitlich durch Vibrationen oder dergleichen verrutschen kann. Die Leitorgane 50, 51 sind nahe den Umlenkrollen 30, 33, dort, wo die Fördergasse 14 am engsten ist, nach außen hin leicht abgewinkelt (Fig. 1), um so ein Verhaken der Packungen unter allen Umständen zu vermeiden. Im Bereich des oberen Abförderers 40 ist ein Druckorgan, nämlich eine Druckrolle 52 vorgesehen, die am Trum 46 anliegend auf die obenliegende Seitenwand 25 einer jeden Packung wirkt.

Im folgenden wird nun das Verfahren zum Ändern der Relativlage der Packungen beschrieben. Dabei zeigen die Pfeile A - F die jeweilige Laufrichtung der Förderbänder 17..20 35, 36 und 44, 45. Die Packungen 11 werden mit Abstand voneinander auf der Zuförderbahn 10 zugefördert. Dabei laufen die in Förderrichtung links angeordneten Förderbänder 17 und 19 mit einer Geschwindigkeit von V2, die größer ist als die Geschwindigkeit V1 der rechtsseitig angeordneten Förderbänder 15, 16. Dies bewirkt, daß die am Anfang der Zuförderbahn 10 quer zur Förderrichtung ausgerichteten Packungen 11 am Ende der Zuförderbahn 10 und damit beim Eintritt in die Fördergasse 14 etwas gedreht und damit schräg ausgerichtet sind. Besonders günstig ist es, wenn die Packungen 11 in einer Relativlage in die Fördergasse 14 eintreten, bei der die Diagonale über die Seitenwände 25 oder 26 quer zur Förderrichtung steht. Genau dieser Fall ist in der Fig. 1 gezeigt. Durch diese Relatiylage zu Beginn der Fördergasse 14 ist sichergestellt, daß die quer zur Förderrichtung wirksame Abmessung der Packung 11 während des Drehvorganges nicht mehr größer wird, sondern nur noch abnimmt. Die Packung 11 kommt sodann mit einer Querkante 53 und einer dieser gegenüberliegenden Querkante 54 am Mitnehmertrum 37 bzw. 38 zur Anlage. Während nun die Packung 11 durch die Abförderer 40, 41 mit einer Geschwindigkeit V3 durch die Fördergasse 14 bewegt wird, erfolgt zugleich eine Drehung der Packung 11 durch die mit unterschiedlichen Geschwindigkeiten V4 und V5 laufenden Förderbänder 35, 36, indem diese jeweils die Querkanten 53, 54 relativ zur Bewegung der Abförderer 40, 41 mitnehmen. Die Packung 11 wird auf diese Weise so weit gedreht, bis sie parallel zur Förderrichtung, entsprechend Packung 39 in Fig. 1, ausgerichtet ist. Die Geschwindigkeit V3 der Förderbänder 44, 45 der Abförderer 40, 41 ist größer als die Geschwindigkeit V2 der schnelleren Förderbänder 17, 19 der Zuförderbahn 10. Die Geschwindigkeit V5 des (in Förderrichtung rechtsseitigen) Drehförderers 13 ist kleiner als die Geschwindigkeit V3 und die Geschwindigkeit V4 des (in Förderrichtung linksseitigen) Drehförderers 12. Dabei ist V5 größer als V2 und V4 größer als V3.

Legt man die Geschwindigkeit V2 als Norm mit 100 % zugrunde, so entspricht V1 etwa 98 %, V3 150 %, V4 200 % und V5 130 %. In absoluten Zahlen ausgedrückt und bei einer Länge der Zuförderbahn 10 von 1.000 mm und einer in Förderrichtung wirksamen Packungsbreite von 20 mm sind folgende Geschwindigkeiten besonders günstig:
V1 = 49 m/min
V2 = 50 m/min
V3 = 77 m/min
V4 = 100 m/min
V5 = 65 m/min

Die Zahlenangaben sind zum Teil gerundet. Die Geschwindigkeit V3 der Abförderer 40, 41 ist deutlich größer als die Geschwindigkeiten V1 und V2 gewählt, um die Packungen 11, 39, 48 auf ihrem Weg durch die Fördergasse 14 größere Abstände voneinander einnehmen zu lassen. Abhängig von dem bereits bestehenden Abstand der Packungen 11 auf der Zuförderbahn 10 ist dies erforderlich, da sonst ein Verkeilen aufeinanderfolgender Packungen während der Drehbewegung eintreten kann. Sofern die Packungen 11 bereits auf der Zuförderbahn 10 einen ausreichend großen Abstand voneinander haben, ist eine Erhöhung der Geschwindigkeit in der Fördergasse 14 nicht erforderlich. In der Fig. 2 ist zu erkennen, daß die Umlenkrolle 42 für das Förderband 44 einen geringeren Außendurchmesser aufweist als die Umlenkrolle 21 für das Förderband 17. Dadurch kommen die Packungen 11 nicht sofort nach Eintritt in die Fördergasse 14 mit ihren obenliegenden Seitenwänden 25 zur Anlage am Trum 46. Die Packungen liegen in dieser Phase nur auf dem Trum 47 des unteren Abförderers 41 auf und erfahren keinen Gegendruck durch den Trum 46. Dieser Gegendruck wirkt vielmehr in Förderrichtung gesehen erst nach Passieren der Druckrolle 52 auf die Packungen (Packung 48 in den Fig. 1 und 2). Die Druckrolle 52 besorgt eine geringfügige Umlenkung des Trums 46 und stellt zugleich einen genauen Abstand zwischen den beiden Trums 46 und 47 ein. Der Abstand der Druckrolle 52 von den Umlenkrollen 31, 33 bzw. 32, 34 ist so gewählt, daß die Packung 48 dem Druck der Druckrolle 52 erst dann ausgesetzt ist, wenn eine in Förderrichtung die Druckrolle zuletzt passierende Querkante 55 der Packung 48 durch die Drehung derselben bereits zwischen dem Trum 46 und dem Trum 47 liegt. Auf diese Weise wird ein Verhaken der Kante 45 mit dem Trum 46 oder 47 vermieden und ein zuverlässig ablaufender Drehvorgang gewährleistet.

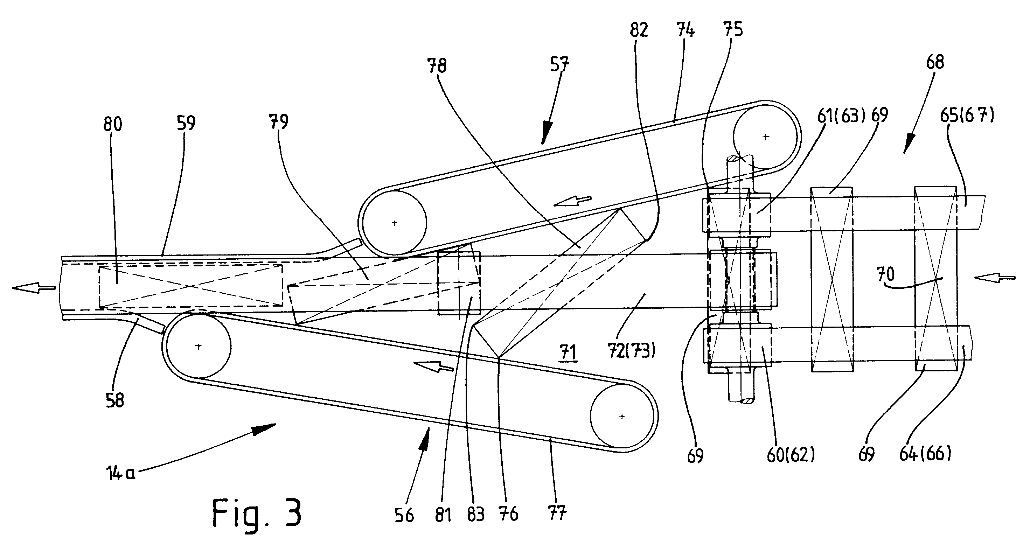

In einer weiteren hier nicht gezeigten Ausführungsform ist die Vorrichtung gemäß den Fig. 1 und 2 oder die weiter unten noch zu beschreibende Vorrichtung gemäß Fig. 3 Teil einer Verpackungsmaschine für Zigaretten-Packungen wie sie zum Beispiel aus der DE 34 00 650 A1 bekannt ist. Bei der dort gezeigten Verpackungsmaschine werden quaderförmige (Zigaretten-)Packungen aus einem Zuschnitt durch Faltung und Klebung hergestellt. Zum Abbinden des Klebers werden die Packungen zunächst einzeln von einem ersten Trockenrevolver aufgenommen und sodann zum Nachtrocknen bzw. Aushärten des Klebers gruppenweise einem zweiten Trockenrevolver zugeführt. Der genannte zweite Trockenrevolver ist in der vorliegenden Ausführungsform der Erfindung durch die Vorrichtung gemäß den Fig. 1 und 2 bzw. 3 ersetzt. Zu diesem Zweck ist der durch die Abförderer 40, 41 und die Leitorgane 50, 51 gebildete Förderkanal 49 in seinem Querschnitt so bemessen, daß auf die Packungen ein formstabilisierender Druck ausgeübt wird. Auf diese Weise ist sichergestellt, daß die gewünschte Form der Packungen exakt eingehalten wird. Außerdem können eventuell auftretende Verschiebungen im Bereich von Klebestellen in den Packungen wieder korrigiert werden.

Fig. 3 zeigt eine weitere Ausführungsform der erfindungsgemäßen Vorrichtung. Soweit im folgenden nicht anders angegeben, entspricht der Aufbau und die Funktion dieser Ausführungsform der aus Fig. 1. Zur besseren Unterscheidbarkeit werden im folgenden unterschiedliche Bezugsziffern verwendet. Im Gegensatz zu den symmetrisch angeordneten Drehförderern 12, 13 der Fig. 1 sind hier Drehförderer 56, 57 vorgesehen, die in Förderrichtung gegeneinander versetzt sind. Entsprechend sind auch daran anschließende Leitorgane 58, 59 versetzt. Der in Förderrichtung rechtsseitige Drehförderer 57 endet etwa eine halbe Drehfördererlänge vor dem linksseitigen Drehförderer 56. Gleichwohl sind beide Förderorgane 56, 57 wie auch schon die Drehförderer 12, 13 in der Fig. 1, etwa gleich lang.

Ein weiterer Unterschied besteht in dem Aufbau der Zuförderbahn. Die den Umlenkrollen 21 bis 24 der Fig. 1 entsprechenden Umlenkrollen 60 bis 63 in der Fig. 3 sind im Gegensatz zu den erstgenannten nicht voneinander getrennt drehbar gelagert. Vielmehr sind die Umlenkrollen 60 und 61 für die auf die der Seitenwand 25 entsprechende Seitenwand 70 wirkenden Förderbänder 64, 65 auf einer gemeinsamen Achse angeordnet. Entsprechendes gilt für die Umlenkrollen 62, 63 der Förderbänder 66, 67.

Der Drehvorgang der Packungen in der Ausführungsform gemäß der Fig. 3 läuft folgendermaßen ab:
Auf der Zuförderbahn 68 zugeförderte Packungen 69 sind mit Abstand voneinander und quer zur Förderrichtung ausgerichtet. Bei Eintritt in eine an die Zuförderbahn 68 anschließende Fördergasse 71 bekommen die Packungen 69 zunächst Kontakt mit dem rechtsseitigen Drehförderer 57. Dabei werden die Packungen 69 von den an die Zuförderbahn 68 anschließenden Abförderern 72, 73 geführt bzw. gehalten. Durch den Geschwindigkeitsunterschied zwischen den Abförderern 72, 73 und einem Förderband 74 des rechtsseitigen Drehförderers 57 sowie durch das Auftreffen einer in Förderrichtung vornliegenden Querkante 75 der Packung 69 auf das Förderband 74 erfolgt die Einleitung der Drehbewegung der Packung 69. Nach einer Drehung von etwa 45° kommt eine weitere, ursprünglich rückwärts gerichtete Querkante 76 mit einem Förderband 77 des linksseitigen Drehförderers 56 zur Anlage. Dieses läuft wiederum schneller als die Abförderer 72, 73 und bewirkt dadurch eine Fortsetzung des Drehvorganges. Die einzelnen Phasen von diesem Zeitpunkt bis zur Beendigung des Drehvorganges sind durch die Packungen mit den Bezugsziffern 78, 79, 80 dargestellt. Die Packung 78 erfährt den ersten Kontakt mit dem Förderband 77. Der Einfluß des Förderbandes 74 auf die Drehung der Packung endet etwa bei der Position der Packung 79 und für die Packung 80 ist der Drehvorgang bereits abgeschlossen. Auch in der Ausführungsform gemäß Fig. 3 ist ein Druckorgan in Gestalt einer Druckrolle 81 vorgesehen die im Bereich des oberen Abförderers 72 auf die obenliegende Seitenwand 70 einer jeden Packung wirkt. Auch hier ist die Druckrolle 81 in Förderrichtung so angeordnet, daß die zwischen die Abförderer 72, 73 drehenden Querkanten 82, 83 der Packung 78 den Drehvorgang nicht behindern können. Die Relativgeschwindigkeiten der einzelnen Förderbänder entsprechen in etwa denen des Ausführungsbeispiels gemäß Fig. 1. Lediglich die Förderbänder 64 bis 67 der Zuförderbahn 68 unterscheiden sich in ihren Geschwindigkeiten nicht, da die Packungen 69 auf der Zuförderbahn 68 nicht teilweise gedreht werden.

## Patentansprüche

1. Verfahren zum Ändern der Relativstellung von Packungen, insbesondere quaderförmigen Zigaretten-Packungen des Typs Klappschachtel (Hinge-Lid-Packung), wobei die Packungen (11, 78) aufeinanderfolgend einer Drehstation (14a) zugeführt werden und dort während des Transports durch wenigstens zwei gesonderte Förderorgane, nämlich Drehförderer (12, 13; 56, 57) gedreht werden, die an gegenüberliegenden Seiten der Packungen (11, 78) angreifen und die mit unterschiedlichen Geschwindigkeiten (V4 und V5) angetrieben werden, **dadurch gekennzeichnet,** daß die Drehförderer (12, 13; 56, 57) die Packung (11, 78) mit in Förderrichtung sich verringerndem Abstand zueinander beaufschlagen.

2. Verfahren nach Anspruch 1, dadurch gekennzeichnet, daß die Packungen (11) durch Mitnahme an insbesondere diametral gegenüberliegenden Querkanten (53, 54) gedreht werden, wobei Vorder-, Rück- und Seitenwände einer Packung begrenzende (Packungs-)Längskanten aus einer Relativstellung im wesentlichen quer zur Förderrichtung in eine Stellung parallel zur Förderrichtung ausgerichtet werden.

3. Verfahren nach Anspruch 1 oder 2, dadurch gekennzeichnet, daß die Packungen (11) des Typs Klappschachtel in einer Relativstellung mit im wesentlichen quergerichteter, aufrechter Vorder- und Rückwand (29, 30), sowie seitlich gerichteter Stirn- und Bodenwand (27, 28) und nach oben und unten weisenden Seitenwänden (25, 26) der Drehstation (14a) zugeführt und in dieser derart gedreht werden, daß nach dem Verlassen der Drehstation (14a) die aufrechte Vorder- und Rückwand (29, 30) sowie die Seitenwände (25, 26) jeweils parallel zur Förderrichtung ausgerichtet sind.

4. Verfahren nach einem der Ansprüche 1 bis 3, dadurch gekennzeichnet, daß die Packungen (11) im Bereich der Drehstation (14a) zur Vergrößerung des Abstandes voneinander in Förderrichtung beschleunigt werden.

5. Verfahren nach einem der Ansprüche 1 bis 4, dadurch gekennzeichnet, daß die Packungen (11) in einer Relativstellung der Drehstation (14a) zugeführt werden, bei der die Vorder- und Rückwand (29, 30) sowie die Stirn- und Bodenwand (27, 28) um einen Winkel gegenüber der quer- bzw. seitlich gerichteten Stellung gedreht sind, insbesondere derart, daß die Diagonale über eine nach oben bzw. unten weisende Seitenwand (26, 27) quer zur Förderrichtung ausgerichtet ist.

6. Verfahren nach einem der Ansprüche 1 bis 5, dadurch gekennzeichnet, daß die Packungen (11) der Drehstation (14a) auf einer Zuförderbahn (10) mit Abstand voneinander und dabei durch Mitnahme an Förderorganen gedreht werden, insbesondere durch Mitnahme an mindestens auf eine Packungsseite wirkende, ein Zufördererpaar bildende und mit unterschiedlichen Geschwindigkeiten laufende Förderbänder (19, 20), vorzugsweise durch Mitnahme an zwei auf die gegenüberliegenden Seitenwände (25, 26) der Packungen (11) wirkende Zufördererpaare (15, 16), und daran anschließend im Bereich der Drehstation (14a) weitergedreht werden.

7. Verfahren nach einem der Ansprüche 1 bis 6, dadurch gekennzeichnet, daß die Packungen (11) im Bereich der Drehstation (14a) durch zwei an gegenüberliegenden Seiten, insbesondere an den nach oben und unten gerichteten Seitenwänden (25, 26) angreifende und vorzugsweise als Förderbänder (44, 45) ausgebildete Abförderer (40, 41) während des Drehens und danach transportiert werden, wobei die Förderbänder (44, 45) mit einer Geschwindigkeit V3 angetrieben werden, die größer als die Geschwindigkeit V5 des langsameren Drehförderers (13) und kleiner als die Geschwindigkeit V4 des schnelleren Drehförderers (12) ist.

8. Verfahren nach Anspruch 7, dadurch gekennzeichnet, daß die Förderbänder (44, 45) der Abförderer (40, 41) im Bereich der Drehstation (14a) einen in Förderrichtung zunehmenden Druck auf die Packungen (Seitenwände 25, 26) ausüben.

9. Verfahren nach Anspruch 7 oder 8, dadurch gekennzeichnet, daß die Förderbänder (44, 45) der Abförderer (40, 41) insbesondere in einem an die Drehstation (14a) anschließenden Bereich auf die Packungen (11) einen formstabilisierenden Druck ausüben.

10. Vorrichtung zum Ändern der Relativstellung von Packungen, insbesondere quaderförmigen Zigaretten-Packungen des Typs Klappschachtel (Hinge-Lid-Packung), in der die Packungen (11, 78) aufeinanderfolgend einer Drehstation (14a) zuführbar sind, wobei im Bereich der Drehstation (14a) zwei gesonderte Förderorgane, nämlich Drehförderer (12, 13; 56, 57), vorzugsweise mit Mitnehmertrums (37, 38) vorgesehen sind, die mit unterschiedlichen Geschwindigkeiten (V4 und V5) antreibbar sind und durch die die Packungen (11, 78) durch Mitnahme an gegenüberliegenden Packungsseiten oder -kanten während des Transports drehbar sind, dadurch gekennzeichnet, daß die Drehförderer (12, 13; 56, 57) bzw. deren Mitnehmertrums (37, 38) unter Bildung einer Fördergasse (14, 71) in Förderrichtung zueinander konvergierend verlaufen.

11. Vorrichtung nach Anspruch 10, dadurch gekennzeichnet, daß die Drehförderer (12, 13) am Ende der Fördergasse (14) einen (Quer-)Abstand voneinander aufweisen, der den Abmessungen einer mit Boden- oder Stirnwand (28, 27) in Förderrichtung und mit Vorder- und Rückwand (29, 30) den Drehförderern (12, 13) zugewandten Packung (11) von der Vorder- zur Rückwand (29, 30) entspricht.

12. Vorrichtung nach Anspruch 10 oder 11, dadurch gekennzeichnet, daß die Drehförderer (12, 13) am Anfang der Fördergasse (14) einen Abstand voneinander aufweisen, der den Diagonalen der sich von Drehförderer (12) zu Drehförderer (13) erstreckenden Seitenwände (25, 26) einer Packung (11) entspricht, so daß die Packung (11) durch Erfassen an sich von Seitenwand (25) zu Seitenwand (26) erstreckenden und einander diametral gegenüberliegenden Querkanten (53, 54) drehbar sind.

13. Vorrichtung nach einem der Ansprüche 10 bis 12, dadurch gekennzeichnet, daß die Drehförderer (56, 57) in Förderrichtung gegeneinander versetzt angeordnet sind, insbesondere um etwa eine halbe Drehfördererlänge.

14. Vorrichtung nach einem der Ansprüche 10 bis 13, dadurch gekennzeichnet, daß zum Fördern der Packungen (11) zumindest im Bereich der Drehstation (14a) zwei an gegenüberliegenden Seiten, insbesondere an den nach oben und unten gerichteten Seitenwänden (25, 26) angreifende und vorzugsweise als Förderbänder (44, 45) ausgebildete Abförderer (40, 41) vorgesehen sind.

15. Vorrichtung nach einem der Ansprüche 10 bis 14, dadurch gekennzeichnet, daß ein durch die Abförderer (40, 41) gebildeter Förderkanal (49) im Bereich der Drehstation (14a) einen in Förderrichtung abnehmenden Querschnitt aufweist.

16. Vorrichtung nach Anspruch 15, dadurch gekennzeichnet, daß zur Verringerung des Querschnitts im Bereich des Förderkanals (49) mindestens einer der vorzugsweise als über Umlenkrollen (42, 43) geführte Förderbänder (44, 45) ausgebildeten Abförderer (40, 41) ein in Richtung des gegenüberliegenden Abförderers (40, 41) wirkendes Druckorgan, vorzugsweise eine Druckrolle (52) aufweist.

17. Vorrichtung nach Anspruch 16, dadurch gekennzeichnet, daß das Druckorgan in Förderrichtung so angeordnet ist, daß auf eine Packung (11) ein Druck ausübbar ist, sobald sich eine das Druckorgan zuletzt passierende Querkante (55) der Packung (48; 78) innerhalb des Förderkanals (49) bzw. zwischen den Förderbändern (44, 45) der Abförderer (40, 41) befindet.

18. Vorrichtung nach einem der Ansprüche 15 bis 17, dadurch gekennzeichnet, daß die Abförderer (40, 41) sich über die Drehstation (14a) hinaus erstrecken, insbesondere mit an die Drehförderer (12, 13) anschließenden Leitorganen (58, 59), so daß der Förderkanal (49) durch die Abförderer (40, 41) und die Leitorgane (58, 59) vorzugsweise als quer zur Förderrichtung allseitig umschlossen ausgebildet ist.

19. Vorrichtung nach einem der Ansprüche 10 bis 18, dadurch gekennzeichnet, daß die Packungen (11) der Drehstation (14a) über eine Zuförderbahn (10) zuförderbar sind, die zwei in parallelen Ebenen angeordnete und durch jeweils zwei Förderbänder (17, 18; 19, 20) gebildete Zufördererpaare (15, 16) aufweist, wobei gegenüberliegende Seitenwände (25, 26) einer Packung (11) jeweils an den Förderbändern (17, 18; 19, 20) eines Zufördererpaares (15, 16) anliegen und daß die Förderbänder (17, 18; 19, 20) über Umlenkrollen (21, 22; 23, 24) geführt sind, die vorzugsweise mit entsprechenden Umlenkrollen (42, 43) für die Förderbänder (44, 45) der Abförderer (40, 41) fluchtend angeordnet sind.

## Claims

1. Process for changing the relative position of packs, especially of cuboidal cigarette packs of the hinge-lid type, the packs (11, 78) being successively delivered to a turning station (14a) and turned there during transport by at least two separate conveying means, namely turning conveyors (12, 13; 56, 57) engaging opposite sides of the packs (11, 78) and being driven by different velocities (V4 and V5), characterized in that the turning conveyors (12, 13; 56, 57) act on the pack (11, 78) with the distance from one another decreasing in the conveying direction.

2. Process according to Claim 1, characterized in that the packs (11) are turned by being driven along at especially diametrically opposite transverse edges (53, 54), (pack) longitudinal edges limiting front, rear and side walls of a pack being oriented from a relative position essentially transverse to the conveying direction into a position parallel to the conveying direction.

3. Process according to Claim 1 or 2, characterized in that the packs (11) of the hinge-lid type are delivered to the turning station (14a) in a relative position with essentially transversely directed upright front and rear wall (29, 30) and sideways directed end and bottom wall (27, 28) and with side walls (25, 26) pointing up- and downwardly and are turned in said turning station (14a) such that after leaving the turning station (14a), the upright front and rear wall (29, 30) and the side walls (25, 26) are each oriented parallel to the conveying direction.

4. Process according to one of Claims 1 to 3, characterized in that the packs (11) are accelerated in the region of the turning station (14a) in order to increase their distances to one another in the conveying direction.

5. Process according to one of Claims 1 to 4, characterized in that the packs (11) are delivered to the turning station (14a) in a relative position, in which the front and rear wall (29, 30) and the end and bottom wall (27, 28) are turned about an angle relative to the transverse or sideways directed position, especially such that the diagonal line across a side wall (26, 27) pointing up- or downwardly is oriented transversely to the conveying direction.

6. Process according to one of Claims 1 to 5, characterized in that the packs (11), being spaced out from one another, are delivered to the turning station (14a) on a feed track (10), in the process of which they are turned by being driven along by conveying means, especially by conveyor belts (19, 20) running at different velocities and contacting at least one pack side and forming a feeder pair, preferably by being driven along by two feeder pairs (15, 16) contacting the opposite side walls (25, 26) of the packs (11) and are subsequently turned further in the region of the turning station (14a).

7. Process according to one of Claims 1 to 6, characterized in that the packs (11) are transported while being turned and thereafter by two discharge conveyors (40, 41) preferably designed as conveyor belts (44, 45) engaging opposite sides, especially engaging the upwardly and downwardly directed side walls (25, 26), the conveyor belts (44, 45) being driven by a velocity V3 which is higher than the velocity V5 of the slower turning conveyor (13) and lower than the velocity V4 of the faster turning conveyor (12).

8. Process according to Claim 7, characterized in that the conveyor belts (44, 45) of the discharge conveyors (40, 41) apply a pressure which is increasing in the conveying direction on the packs (side walls 25, 26) in the region of the turning station (14a).

9. Process according to Claim 7 or 8, characterized in that the conveyor belts (44, 45) of the discharge conveyors (40, 41) apply a form-stabilizing pressure on the packs (11) especially in a region adjoining the turning station (14a).

10. Apparatus for changing the relative position of packs, especially of cuboidal cigarette packs of the hinge-lid type, in which the packs (11, 78) can be successively delivered to a turning station (14a), two separate conveying means, namely turning conveyors (12, 13; 56, 57) being provided in the region of the turning station (14a) preferably with driver strands (37, 38), which are drivable at different velocities (V4 and V5) and by means of which the packs (11, 78) are turnable by being driven along at opposite pack sides or edges during transport, characterized in that the turning conveyors (12, 13; 56, 57) or their driver strands (37, 38) converge with each other in the conveying direction, forming a conveying passage (14, 71).

11. Apparatus according to Claim 10, characterized in that the turning conveyors (12, 13) are spaced out at the end of the conveying passage (14) at a (transverse) distance corresponding to the dimensions from front to rear wall (29, 30) of a pack (11) pointing with bottom or end wall (28, 27) in the conveying direction and with front and rear wall (29, 30) towards the turning conveyors (12, 13).

12. Apparatus according to Claim 10 or 11, characterized in that the turning conveyors (12, 13) are spaced out at the beginning of the conveying passage (14) at a distance corresponding to the diagonal lines of the side walls (25, 26) of a pack (11) extending from turning conveyor (12) to turning conveyor (13), such that the pack (11) is turnable by way of being grasped at transverse edges (53, 54) extending from side wall (25) to side wall (26) and being diametrically opposite to one another.

13. Apparatus according to one of Claims 10 to 12, characterized in that the turning conveyors (56, 57) are arranged offset in the conveying direction, especially by approximately half a length of the turning conveyor.

14. Apparatus according to one of Claims 10 to 13, characterized in that two discharge conveyors (40, 41) are provided, preferably in the form of conveyor belts (44, 45) engaging opposite sides, especially the up- and downwardly directed side walls (25, 26), for conveying the packs (11) at least in the region of the turning station (14a).

15. Apparatus according to one of Claims 10 to 14, characterized in that a conveying channel (49) formed by the discharge conveyors (40, 41) in the region of the turning station (14a) has a cross-section which decreases in the conveying direction.

16. Apparatus according to Claim 15, characterized in that at least one of the discharge conveyors (40, 41) preferably being in the form of conveyor belts (44, 45) led over deflecting rollers (42, 43) has a pressure means, preferably a pressure roller (52), taking effect in the direction of the opposite discharge conveyor (40, 41) for decreasing the cross-section in the region of the conveying channel (49).

17. Apparatus according to Claim 16, characterized in that the pressure means is arranged in the conveying direction such that a pressure is applicable on a pack (11), as soon as a transverse edge (55) of the pack (48; 78) passing the pressure means last is within the conveying channel (49), or between the conveyor belts (44, 45) of the discharge conveyors (40, 41).

18. Apparatus according to one of Claims 15 to 17, characterized in that the discharge conveyors (40, 41) extend beyond the turning station (14a), especially with guiding means (58, 59) adjoining the turning conveyors (12, 13), so that the conveying channel (49) is formed by the discharge conveyors (40, 41) and the guiding means (58, 59) such that it is preferably enclosed all-round transverse to the conveying direction.

19. Apparatus according to one of Claims 10 to 18, characterized in that the packs (11) are feedable to the turning station (14a) via a feed track (10) having two feeder pairs (15, 16) arranged in parallel planes and being formed by two conveyor belts (17, 18; 19, 20) each, opposite side walls (25, 26) of a pack (11) each contacting the conveyor belts (17, 18; 19, 20) of a feeder pair (15, 16) and in that the conveyor belts (17, 18; 19, 20) are led over deflecting rollers (21, 22; 23, 24) which are preferably in alignment with corresponding deflecting rollers (42, 43) for the conveyor belts (44, 45) of the discharge conveyors (40, 41).

## Revendications

1. Procédé pour modifier la position relative d'emballages, en particulier d'emballages de cigarettes parallélépipédiques, du type boîte à rabats (hinge-lid), les emballages (11, 78) étant amenés les uns à la suite des autres à un poste de pivotement (14a) et en les y faisant pivoter, pendant le transport, grâce à au moins deux organes de transport séparés, notamment des transporteurs tournants (12, 13 ; 56, 57), agissant sur des faces opposées des emballages (11, 78) et entraînés à des vitesses (V4 et V5) différentes, caractérisé en ce que les transporteurs tournants (12, 13 ; 56, 57) attaquent l'emballage (11, 78) en des points dont l'écartement va en diminuant en direction du transport.

2. Procédé selon la revendication 1, caractérisé en ce que les emballages (11) pivotent par entraînement sur des arêtes transversales (53, 54), en particulier diamétralement opposées, les arêtes longitudinales (d'emballage), délimitant les parois, avant, arrière et latérales d'un emballage passant, d'une position relative, d'orientation sensiblement transversale par rapport à la direction du transport, à une position d'orientation parallèle à la direction de transport.

3. Procédé selon la revendication 1 ou 2, caractérisé en ce que les emballages (11) du type boîte à rabats sont amenés au poste de pivotement (14a) en une position relative à paroi avant et paroi arrière (29, 30) relevées, orientées sensiblement transversalement, ainsi que la paroi frontale et la paroi de fond (27, 28) orientées latéralement, et les parois latérales (25, 26) tournées vers le haut et vers le bas, et pivotent dans ce poste (14a) de manière que, après avoir quitté le poste de pivotement (14a), la paroi avant et la paroi arrière (29, 30) relevées ainsi que les parois latérales (25, 26) soient chacune orientées parallèlement à la direction de transport.

4. Procédé selon l'une des revendications 1 à 3, caractérisé en ce que les emballages (11) sont accélérés dans la zone du poste de pivotement (14a), en vue d'augmenter la distance qui les sépare les uns des autres dans la direction de transport.

5. Procédé selon l'une des revendications 1 à 4, caractérisé en ce que les emballages (11) sont amenés au poste de pivotement (14a) en une position relative pour laquelle les parois avant et arrière (29, 30), ainsi que les parois frontale et de fond (27, 28) ont tourné d'un angle par rapport à la position orientée transversalement, respectivement, latéralement, en particulier de manière que la diagonale sur une paroi latérale (26, 27) tournée vers le haut ou vers le bas soit orientée transversalement par rapport à la direction de transport.

6. Procédé selon l'une des revendications 1 à 5 caractérisé en ce que les emballages (11) sont amenés au poste de pivotement (14a) sur une bande d'alimentation (10), à distance les uns des autres et, y pivotent par entraînement sur des organes de transport, en particulier par entraînement sur des bandes transporteuses (19, 20), agissant au moins sur une face de l'emballage, constituant un couple de transporteurs d'alimentation et défilant à des vitesses différentes, de préférence par entraînement sur des couples de transporteurs d'alimentation (15, 16) agissant sur les parois latérales (25, 26) opposées des emballages (11), puis étant l'objet d'un pivotement supplémentaire dans la zone du poste de pivotement (14a).

7. Procédé selon l'une des revendications 1 à 6, caractérisé en ce que les emballages (11) sont transportés dans la zone du poste de pivotement (14a) par deux transporteurs d'évacuation (40, 41) agissant sur des faces opposées, en particulier sur les parois latérales (25, 26) orientées vers le haut et vers le bas et, de préférence, réalisés comme bandes transporteuses (44, 45), ceci pendant le pivotement, puis sont transportés, les bandes transporteuses (44, 45) étant entraînées à une vitesse V3 supérieure à la vitesse V5 du transporteur tournant (13) le plus lent et inférieure à la vitesse V4 du transporteur tournant (12) le plus rapide.

8. Procédé selon la revendication 7, caractérisé en ce que les bandes transporteuses (44, 45) des transporteurs d'évacuation (40, 41) exercent sur les emballages (parois latérales 25, 26), dans la zone du poste rotatif (14a), une pression allant en augmentant dans la direction du transport.

9. Procédé selon la revendication 7 ou 8, caractérisé en ce que les bandes transporteuses (44, 45) des transporteurs d'évacuation (40, 41) exercent sur les emballages (11) une pression produisant une stabilisation de leur forme, en particulier dans une zone connexe au poste de pivotement (14a).

10. Dispositif de modification de la position relative d'emballages en particulier d'emballages de cigarettes parallélépipédiques du type à boîte à rabats (emballage hinge-lid), dans lequel les emballages (11, 78) peuvent être amenés les uns à la suite des autres à un poste de pivotement (14a), deux organes de transfert séparés, notamment des transporteurs tournants (12, 13 ; 56, 57) étant prévus dans la zone du poste de pivotement (14a), de préférence avec un brin d'entraînement (37, 38), les transporteurs tournants pouvant être entraînés à des vitesses (V4 et V5) différentes et au moyen desquels les emballages (11, 18) peuvent pivoter pendant le transport par entraînement sur des faces ou des arêtes opposées d'emballages, caractérisé en ce que les transporteurs tournants (12, 13 ; 56, 57) respectivement leurs brins d'entraînement (37, 38), s'étendent en allant en convergeant l'un par rapport à l'autre dans la direction du transport, en constituant une goulotte de transfert (14, 71).

11. Dispositif selon la revendication 10, caractérisé en ce que les transporteurs tournants (12, 13) présentent, entre eux à la fin de la goulotte de transfert (14), un espacement (transversal), qui correspond aux dimensions de la paroi avant et de la paroi arrière (29, 30) d'un emballage (11), à paroi fond et paroi frontale (28, 27), dans la direction du transport, et paroi avant et paroi arrière (29, 30) tournées vers les transporteurs tournants (12, 13).

12. Dispositif selon la revendication 10 ou 11, caractérisé en ce que les transporteurs tournants (12, 13) présentent, entre eux au début de la goulotte de transfert (14), un espacement qui correspond à la diagonale des parois latérales (25, 26), s'étendant dû transporteur tournant (12) au transporteur tournant (13), d'un emballage (11), de sorte que l'emballage (11) peut pivoter, par saisie sur des arêtes transversales (53, 54) s'étendant de la paroi latérale (25) à la paroi latérale (26) et diamétralement opposées l'une par rapport à l'autre.

13. Dispositif selon l'une des revendications 10 à 12 caractérisé en ce que les transporteurs tournants (56, 57) sont disposés dans la direction de transport décalés les uns par rapport aux autres, en particulier de la valeur d'à peu près la moitié de la longueur du transporteur tournant.

14. Dispositif selon l'une des revendications 10 à 13, caractérisé en ce que, pour transporter les emballages (11), sont prévus, au moins dans la zone du poste de pivotement (14a), deux transporteurs d'évacuation (40, 41), agissant sur des faces opposées, en particulier sur les parois latérales (25, 26) orientées vers le haut et vers le bas et réalisés de préférence sous forme de bandes transporteuses (44, 45).

15. Dispositif selon l'une des revendications 10 à 14, caractérisé en ce qu'un canal de transfert (49), constitué par les transporteurs d'évacuation (40, 41), présente, dans la zone du poste de pivotement (14a), une section transversale allant en diminuant en évoluant dans la direction du transport.

16. Dispositif selon la revendication 15, caractérisé en ce que, pour diminuer la section transversale dans la zone du canal de transfert (49), au moins l'un des transporteurs d'évacuation (40, 41); réalisé de préférence sous forme de bande transporteuse (44, 45) guidée sur des rouleaux de renvoi (42, 43), présente un organe presseur agissant dans la direction du transporteur d'évacuation (40, 41) placé en regard, de préférence un galet presseur (52).

17. Dispositif selon la revendication 16, caractérisé en ce que l'organe presseur est disposé dans la direction de transport, de manière à ce qu'une pression puisse être exercée sur une emballage (11) dès qu'une arête transversale (55), passant la dernière sur l'organe presseur, de l'emballage (48 ; 78) se trouve à l'intérieur du canal de transfert (49) respectivement entre les bandes transporteuses (44, 45) des transporteurs d'évacuation (40, 41).

18. Dispositif selon l'une des revendications 15 à 17, caractérisé en ce que les transporteurs d'évacuation (40, 41) s'étendent depuis le poste de pivotement (14a), en particulier avec des organes de guidage (58, 59) se raccordant au transporteur tournant (12, 13), de sorte que le canal de transfert (49) soit réalisé fermé de toutes parts, par les transporteurs d'évacuation (40, 41) et les organes de guidage (58, 59), de préférence en étant fermé transversalement par rapport à la direction du transport.

19. Dispositif selon l'une des revendications 10 à 18, caractérisé en ce que les emballages (11) sont amenables au poste de pivotement (14a) par une bande (10), présentant deux paires de transporteurs d'amenée (15, 16) disposés en plans parallèles et constitués chacun par deux bandes transporteuses (17, 18 ; 19, 20), les parois latérales (25, 26) opposées d'un emballage (11) s'appuyant chacune sur les bandes transporteuses (17, 18 ; 19, 20) d'une paire de transporteurs d'amenée (15, 16) et en ce que les bandes transporteuses (17, 18 ; 19, 20) sont guidées sur des rouleaux de renvoi (21, 22 ; 23, 24), disposés alignés de préférence avec des rouleaux de renvoi (42, 43) correspondants destinés aux bandes transporteuses (44, 45) des transporteurs d'évacuation (40, 41).
